# EUROPÄISCHE PATENTSCHRIFT

(11) **EP 3 072 834 B1**
(45) Veröffentlichungstag und Bekanntmachung des Hinweises auf die Patenterteilung: **23.11.2022**
(21) Anmeldenummer: 16160423.6
(22) Anmeldetag: 15.03.2016
(51) Int. Cl.: B65G 25/02, B65G 47/82

(54) **TRANSPORTVORRICHTUNG MIT EINEM TRANPORTRECHEN**
CONVEYING DEVICE WITH A TRANSPORT RAKE
DISPOSITIF DE TRANSPORT MUNI D'UN PEIGNE DE TRANSPORT

(30) Priorität: 25.03.2015 DE 102015205471
(43) Veröffentlichungstag der Anmeldung: 28.09.2016
(73) Patentinhaber: OPTIMA pharma GmbH, 74523 Schwäbisch Hall (DE)
(72) Erfinder: Pospiech, Dr. Thomas, 74257 Untereisesheim (DE); Thomas, Gerald, 74538 Rosengarten (DE); Rothbauer, Jürgen, 74545 Michelfeld (DE)
(74) Vertreter: Patentanwälte Ruff, Wilhelm, Beier, Dauster & Partner mbB

(56) Entgegenhaltungen:
- EP-A1- 2 789 556
- DE-A1- 19 604 100

## Beschreibung

### ANWENDUNGSGEBIET UND STAND DER TECHNIK

Die Erfindung betrifft eine Transportvorrichtung für ein Transportgut umfassend einen Transportrechen mit mindestens einem Zinken und eine mit dem Transportrechen wirkverbundene Antriebsanordnung, wobei der Transportrechen mittels der Antriebsanordnung zu einer Hin- und Herbewegung in Transportrichtung und zu einer Hin-und Herbewegung in Eintauchrichtung antreibbar ist. Die Erfindung betrifft weiter ein Verfahren zum Betreiben einer Transportvorrichtung für ein Transportgut.

Transportvorrichtungen sind in Anlagen eingesetzt, um Transportgüter, insbesondere Flaschen, Dosen, Ampullen, Vials und andere Behälter, zu einer Station, beispielsweise einer Verpackungs-, Verschließ-, Verschweiß-, Abfüll-, Montage- und/oder Bearbeitungsstation oder dergleichen, zu transportieren und/oder von dieser abzutransportieren. Dabei sind sogenannte Transportrechen bekannt, welche einen Aufnahmebereich für das Transportgut aufweisen. Mittels eines Transportrechen wird das Transportgut getaktet oder - insbesondere bei Verwendung mehrere zusammenwirkender Transportrechen - quasi kontinuierlich gefördert.

Eine Bewegung des Transportrechens in Richtung auf das Transportgut und weg von dem Transportgut wird im Zusammenhang mit der Anmeldung als Eintauchbewegung oder Bewegung in Eintauchrichtung bezeichnet. Der Transportrechen wird mittels der Antriebsanordnung entlang einer definierten Bahn aus einer ersten Position in Transportrichtung in eine zweite Position, aus der zweiten Position in Eintauchrichtung weg von dem Transportgut zur Freigabe des Transportguts in eine dritte Position, aus der dritten Position entgegen der Transportrichtung in eine vierte Position und aus der vierten Position in Eintauchrichtung in Richtung des Transportguts in die erste Position bewegt.

Ein Transportrechen ist beispielweise aus EP 2 495 193 B1 bekannt, wobei die Antriebsanordnung vorzugsweise mehrere Paare von Schenkeln, die drehbar an dem Transportrechen gelagert sind, umfasst, und wobei jedes Schenkelpaar eine sich vom Transportrechen weg öffnende V-Form bildet. Jeder der Schenkel eines Schenkelpaars ist auf der dem Transportrechen abgewandten Seite drehbar mit einem Verschiebungselement verbunden. Ein Verschiebungselement eines ersten Schenkels und ein Verschiebungselement eines zweiten Schenkels eines Schenkelpaars sind jeweils mit einem eigenen Antrieb unabhängig voneinander bewegbar. Durch gleichmäßiges Verfahren der beiden Schenkel eines jeden Schenkelpaars erfolgt eine Hin- und Herbewegung des Transportrechens in Transportrichtung, während durch eine auseinander und eine aufeinander zu gerichtete Bewegung der Verschiebungselemente eines Schenkelpaars eine Hin- und Herbewegung des Transportrechens in eine Eintauchrichtung quer zur Transportrichtung erzeugt wird. Um in dem Transportrechen aufgenommene Behälter während des Transports in Ausnehmungen des Transportrechens sicher aufzunehmen ist gemäß EP 2 495 193 B1 auf der dem Transportrechen gegenüberliegenden Seite ein Gegenhalteelement für die Behälter angeordnet, mittels welchem die Behälter bei Bewegung des Transportrechens in Transportrichtung in die Ausnehmungen gedrückt bleiben.

Aus DE 26 30 069 A1 ist es bekannt, an den Ausnehmungen des Transportrechens passive Klemmfedern vorzusehen, mittels welcher Ampullen in den Ausnehmungen geklemmt werden.

Aus EP 2 789 556 A1 ist gemäß dem Oberbegriff des Anspruchs 1 eine Transporteinrichtung mit einem Transportband, einem an dem Transportband fest angeordneten ersten Rechen und einem relativ zu dem ersten Rechen beweglichen zweiten Rechen bekannt, wobei Zinken des ersten Rechens und des zweiten Rechens von einer Ebene unterhalb einer Transportebene durch eine Bewegung in vertikaler Richtung in Ausnehmungen an einer Unterseite eines Transportguts eingeführt werden. Eine gemeinsame Bewegung in Transportrichtung erfolgt mittels des Transportbands. Eine gemeinsame Bewegung der Rechen vertikaler Richtung wird mittels einer zweiten Antriebsvorrichtung bewirkt. Zudem ist zwischen dem ersten Rechen und dem zweiten Rechen eine dritte Antriebsvorrichtung vorgesehen, mittels welcher der zweite Rechen relativ zu dem ersten Rechen in Transportrichtung zum Freigeben oder Greifen des Transportguts bewegbar ist.

Aus DE 196 04 100 A1 ist eine Vorrichtung zum Übernehmen von Spritzenkörper bekannt. Die Vorrichtung weist Aussparungen für die Spritzenkörper auf, in welchen die Spritzenkörper mittels drehbar gelagerter, Haltenasen aufweisender Stifte gehalten wird.

Es ist eine Aufgabe der Erfindung, eine Transportvorrichtung mit einem Transportrechen zu schaffen, welche eine zuverlässige Bewegung von Transportgütern unterschiedlichen Durchmessers mittels eines Transportrechens erlaubt. Es ist eine weitere Aufgabe der Erfindung, ein Verfahren zum Betreiben einer Transportvorrichtung zu schaffen.

### AUFGABE UND LÖSUNG

Diese Aufgaben werden gelöst durch die Gegenstände mit den Merkmalen der Ansprüche 1 und 5. Weitere Vorteile der Erfindung ergeben sich aus den Unteransprüchen.

Gemäß einem ersten Aspekt wird eine Transportvorrichtung für ein Transportgut geschaffen, umfassend einen Transportrechen mit mehreren Zinken, eine mit dem Transportrechen wirkverbundene erste Antriebsanordnung, wobei der Transportrechen mittels der ersten Antriebsanordnung zu einer Hin- und Herbewegung in Transportrichtung und zu einer Hin-und Herbewegung in Eintauchrichtung antreibbar ist, einen Gegenrechen mit mehreren Zinken und eine mit dem Gegenrechen wirkverbundene zweite Antriebsanordnung, wobei der Gegenrechen mittels der zweiten Antriebsanordnung in Transportrichtung relativ zu dem Transportrechen verstellbar ist, wobei die erste Antriebsanordnung und die zweite Antriebsanordnung mechanisch entkoppelt sind und der Transportrechen mittels der ersten Antriebsanordnung und der Gegenrechen mittels der zweiten Antriebsanordnung jeweils zu einer Bewegung in der Transportrichtung aus einer ersten Position in eine zweite Position antreibbar sind, wobei der Gegenrechen mittels der zweiten Antriebsanordnung in Transportrichtung relativ zu dem Transportrechen verstellbar ist, um ein Transportgut zwischen dem mindestens einen Zinken des Transportrechens und dem diesen zugeordneten Zinken des Gegenrechens zu klemmen, und der Transportrechen mittels der ersten Antriebsanordnung und der Gegenrechen mittels der zweiten Antriebsanordnung in Transportrichtung gemeinsam bewegbar sind, wobei bei gemeinsamer Bewegung des Gegenrechens und des Transportrechens ein Transport des Transportguts in Transportrichtung erfolgt.

Die Antriebsanordnungen des Transportrechens und des Gegenrechens wirken zusammen, wobei der Transportrechen und der Gegenrechen mittels der ersten und der zweiten Antriebsanordnung synchron oder mit einem Zeitversatz zu einer Hin- und Herbewegung in der Transportrichtung antreibbar sind. Durch geeignete Wahl des Zeitversatzes ist es dem Fachmann möglich, eine Greif- oder Klemmbewegung an ein Transportgut anzupassen

Durch die Bewegung des Gegenrechens in Transportrichtung relativ zu dem Transportrechen wird das Transportgut geklemmt, wobei ein Öffnungsmaß, ein Verstellweg und eine Klemmkraft durch Wahl der Relativbewegung einstellbar sind. Bei gemeinsamer Bewegung erfolgt ein Transport in Transportrichtung.

Der Transportrechen und der Gegenrechen sind vorzugsweise gleich orientiert, d.h. freie Enden der Zinken des Transportrechens und des Gegenrechens weisen vorzugsweise in die gleiche Richtung, sodass das Transportgut ohne Bewegung aus der Transportebene in die Aufnahmebereiche einführbar ist. Der Transportrechen und der Gegenrechen sind zu diesem Zweck zumindest teilweise senkrecht zur Transportebene versetzt angeordnet. Die Eintauchrichtung ist je nach Anwendungsfall geeignet wählbar. In vorteilhaften Ausgestaltungen erfolgt eine Eintauchbewegung quer, insbesondere senkrecht zur Transportrichtung in einer Transportebene.

Der Transportrechen und der Gegenrechen weisen jeweils mehrere Zinken auf, wobei jeweils zwischen einem Zinken des Transportrechens und einem Zinken des Gegenrechens ein Transportgut geklemmt werden kann. Zwei Zinken des Transportrechens begrenzen weiter vorzugsweise Aufnahmebereiche, wobei in allen Aufnahmebereichen oder in einem Teil der Aufnahmebereiche jeweils ein Zinken des Gegenrechens positioniert ist. Dabei ist in einer Ausgestaltung vorgesehen, dass die Zinken des Transportrechens oder des Gegenrechens von einem zugehörigen Grundkörper in einer Richtung senkrecht zur Transportebene abragen und die Zinken ineinander kämmend angeordnet sind. In anderen Ausgestaltungen greifen die Zinken das Transportgut in unterschiedlicher Höhe senkrecht zur Transportebene. Als ein Positionieren in einem Aufnahmebereich wird somit im Zusammenhang mit der Anmeldung auch eine Positionierung bezeichnet, bei welcher die Zinken auf unterschiedlicher Höhe in Transportrichtung angeordnet sind, jedoch in einer Draufsicht auf die Transportebene die Zinken des Gegenrechens in dem Aufnahmebereich positioniert sind.

In einer Ausgestaltung sind der Transportrechen und der Gegenrechen in Transportrichtung verschieblich miteinander gekoppelt. Eine Relativbewegung in andere Richtungen ist dabei vorzugsweise gesperrt, sodass der Gegenrechen dem Transportrechen und umgekehrt als Führungseinrichtung dient. D.h. bei stationär gehaltenem Gegenrechen ist eine Bewegung des Transportrechens nur in oder entgegen der Transportrichtung möglich. Minimale Spielbewegungen für einen Toleranzausgleich sind dabei auch in andere Richtungen möglich. Ebenso ist bei stationär gehaltenem Transportrechen eine Bewegung des Gegenrechens nur in oder entgegen der Transportrichtung möglich. Für eine Bewegung in Eintauchrichtung sind daher der Transportrechen und der Gegenrechen synchron anzutreiben. In anderen Ausgestaltungen ist eine Relativbewegung in Richtungen quer zur Transportrichtung ebenfalls möglich, sodass die der Transportrechen und der Gegenrechen auch in Eintauchrichtung Relativbewegungen bei durchführen können.

In einer Ausgestaltung sind die Antriebsanordnungen des Transportrechens und des Gegenrechens mechanisch entkoppelt, wobei die Antriebsanordnungen beispielsweise jeweils wie aus EP 2 495 193 B1 bekannt gestaltet sind und eine zeitversetzte Bewegung durchführen.

Die erste Antriebsordnung und die zweite Antriebsanordnung weisen in einer Ausgestaltung jeweils mindestens zwei miteinander gekoppelte, jeweils um eine senkrecht zur Transportebene stehenden Achse verschwenkbare Glieder und zwei den Gliedern zugeordnete Antriebe auf. In anderen Worten ist die Antriebsanordnung nach Art eines SCARA-Roboters aufgebaut, sodass jeweils eine Positionierung eines distalen Endes des zweiten Glieds in einer Transportebene möglich ist. Die Glieder sind als Hebel oder Arme oder mittels Exzenterscheiben realisierbar. Das distale Ende ist mit den Transportrechen bzw. dem Gegenrechen gekoppelt. Dabei sind vorzugsweise die distalen Enden verschwenkbar mit dem Transportrechen bzw. dem Gegenrechen gekoppelt und der Transportrechen und der Gegenrechen mit einem Freiheitsgrad verschieblich miteinander gekoppelt.

Für eine zusätzliche Bewegung weisen die erste Antriebsordnung und die zweite Antriebsanordnung in einer Ausgestaltung zusätzlich jeweils einen dritten Antrieb auf, mittels welchen der Transportrechen und der Gegenrechen zusammen senkrecht zur Transportebene verstellbar sind. Ein Verstellen senkrecht zur Transportebene ist dabei möglich, während das Transportgut zwischen dem Transportrechen und dem Gegenrechen geklemmt ist. Dadurch ist eine Flexibilität einer zugehörigen Anlage weiter vergrößerbar.

Gemäß einem zweiten Aspekt wird ein Verfahren zum Betreiben einer Transportvorrichtung für ein Transportgut geschaffen, wobei die Transportvorrichtung einen Transportrechen mit mehreren, jeweils durch zwei Zinken begrenzten Aufnahmebereich für das Transportgut, eine mit dem Transportrechen wirkverbundene erste Antriebsanordnung, einen Gegenrechen mit mehreren Zinken und eine mit dem Gegenrechen wirkverbundene zweite Antriebsanordnung aufweist, wobei die Zinken des Gegenrechens jeweils in einem der Aufnahmebereichs des Transportrechens positioniert werden, der Transportrechen mittels der ersten Antriebsanordnung zu einer Hin- und Herbewegung in Transportrichtung und zu einer Hin- und Herbewegung in Eintauchrichtung angetrieben wird, und der Gegenrechen mittels der zweiten Antriebsanordnung zu einer Hin- und Herbewegung in Transportrichtung angetrieben wird, der Transportrechen mittels der ersten Antriebsanordnung und der Gegenrechen mittels der zweiten Antriebsanordnung jeweils aus einer ersten Position in der Transportrichtung in eine zweite Position bewegt werden, wobei er Gegenrechen mittels der zweiten Antriebsanordnung in Transportrichtung relativ zu dem Transportrechen verstellt wird, um ein Transportgut in dem Aufnahmebereich mittels des zugeordneten Zinkens des Gegenrechens zu klemmen, und für einen Transport des Transportguts in Transportrichtung der Transportrechen mittels der ersten Antriebsanordnung und der Gegenrechen mittels der zweiten Antriebsanordnung in Transportrichtung gemeinsam bewegt werden. Ein Antrieb des Transportrechens und des Gegenrechens ist dabei mittels geeigneter Antriebsanordnungen realisierbar.

Vorzugsweise werden der Transportrechen und der Gegenrechen in Transportrichtung verschieblich miteinander gekoppelt.

Der Transportrechen und der Gegenrechen werden mittels der ersten und der zweiten Antriebsanordnung synchron oder mit einem Zeitversatz zusammen zu einer Hin-und Herbewegung in der Transportrichtung angetrieben. Bei synchroner Bewegung erfolgt dabei keine Klemmung.

Insbesondere ist vorzugsweise vorgesehen, dass der Transportrechen und der Gegenrechen mittels der ersten und der zweiten Antriebsanordnung angetrieben werden, sodass der Transportrechen und der Gegenrechen mit einem Zeitversatz jeweils aus einer ersten Position in der Transportrichtung in eine zweite Position bewegt werden, aus der zweiten Position synchron in der Eintauchrichtung weg von dem Transportgut in eine dritte Position bewegt werden, aus der dritten Position synchron entgegen der Transportrichtung in eine vierte Position bewegt werden und aus der vierten Position synchron in der Eintauchrichtung auf ein Transportgut in die erste Position bewegt werden. Die Bewegung kann an jeder Position oder zwischen den Positionen gestartet oder beendet werden. Vorzugsweise wird die Bewegung mehrfach wiederholt durchgeführt. Eine Eintauchbewegung erfolgt in bekannten Ausgestaltungen senkrecht zur Transportrichtung in einer Transportebene. Alternativ erfolgt eine Eintauchbewegung entlang einer Bahnkurve durch Rotation um eine zur Transportrichtung parallele Achse.

Eine derartige Bewegung ist durch geeignete Antriebsanordnungen realisierbar. Insbesondere ist in vorteilhaften Ausgestaltungen vorgesehen, dass die erste Antriebsordnung und/oder die zweiten Antriebsanordnung jeweils mindestens zwei miteinander gekoppelte, jeweils um eine senkrecht zur Transportebene stehenden Achse verschwenkbare Glieder und zwei den Gliedern zugeordnete Antriebe aufweisen, wobei die Antriebe angesteuert werden, um die Glieder der ersten Antriebsordnung und der zweiten Antriebsanordnung synchron oder mit Zeitversatz zu verschwenken. Insbesondere ist es dabei möglich, die Glieder der ersten Antriebsanordnung derart zu verschwenken, dass ein distales Ende des zweiten Glieds der ersten Antriebsanordnung in Transportrichtung verstellt wird. Das distale Ende ist mit dem Transportrechen gekoppelt. Der Transportrechen ist zudem verschieblich mit dem Gegenrechen verbunden und wird durch diesen geführt. Dadurch ist es möglich, durch eine Verschwenkbewegung der Glieder der ersten Antriebsanordnung den Transportrechen in Transportrichtung zu verschieben.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert ist. Dabei zeigen:
- Fig. 1:: eine Ausführungsform der Transportvorrichtung in einer perspektivischen Darstellung,
- Fig. 2:: die Transportvorrichtung gemäß Fig. 1 in einer Seitenansicht und
- Fig. 3:: die Transportvorrichtung gemäß Fig. 1 in einer Draufsicht.

### DETAILLIERTE BESCHREIBUNG DER AUSFÜHRUNGSBEISPIELE

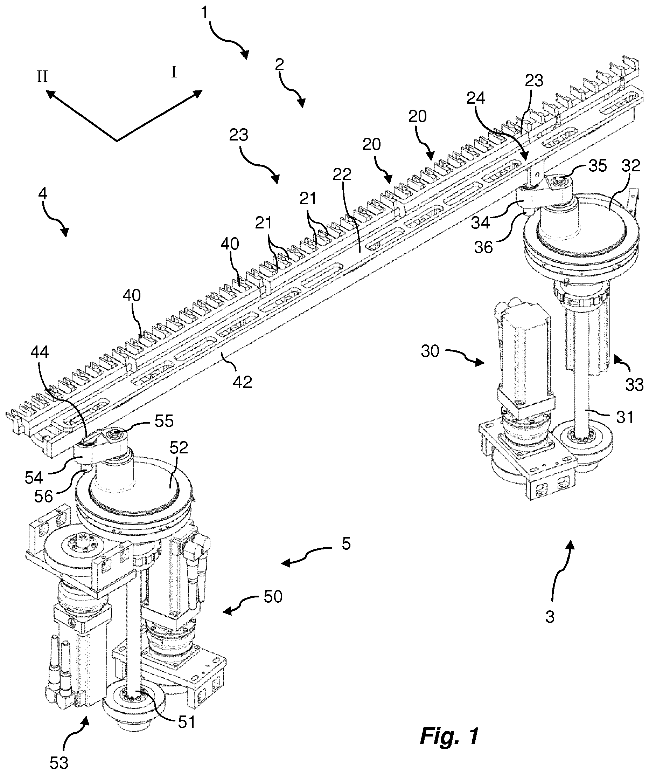

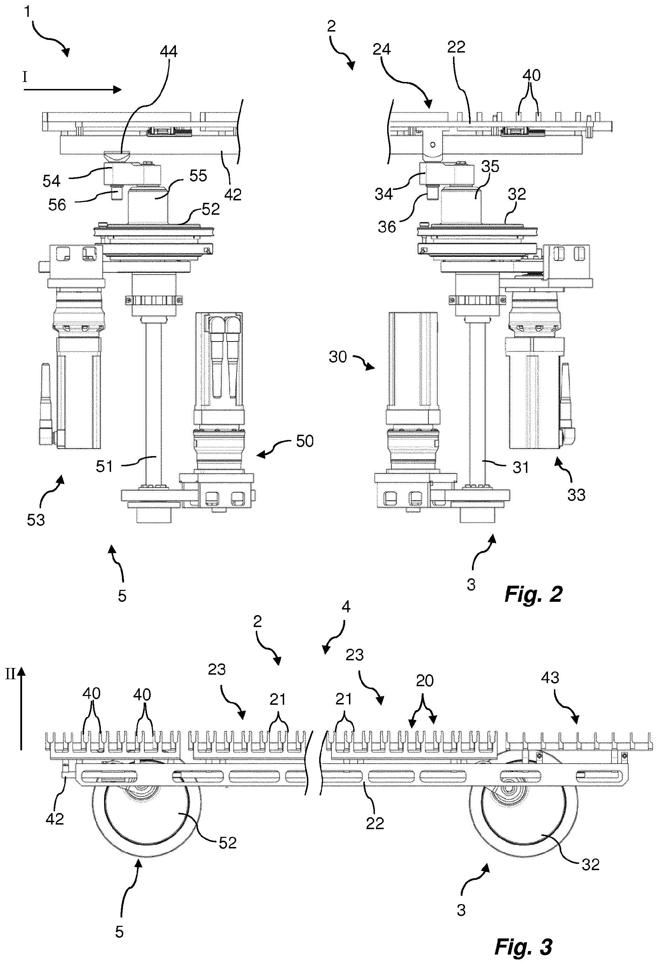

Die Figuren 1 bis 3 zeigen schematisch eine Transportvorrichtung 1 für ein Transportgut in einer perspektivischen Darstellung, einer Seitenansicht bzw. einer Draufsicht.

Die Transportvorrichtung 1 umfasst einen Transportrechen 2 mit mehreren, Aufnahmebereiche 20 definierenden Zinken 21 für das nicht dargestellte Transportgut. Der dargestellte Transportrechen 2 umfasst eine Schiene 22, an welcher mehrere, in dem dargestellten Ausführungsbeispiel vier, die Zinken 21 aufweisende Grundkörper 23 ortsfest angeordnet sind. Durch die Gestaltung mit einer Vielzahl an Grundkörper 23 ist eine einfache Bauweise möglich, wobei unterschiedliche Längen des Transportrechens durch geeignete Wahl einer Schiene 22 realisiert werden können.

Die Transportvorrichtung 1 umfasst weiter eine mit dem Transportrechen 2 wirkverbundene Antriebsanordnung 3. Der Transportrechen 2 ist mittels der Antriebsanordnung 3 zu einer Hin- und Herbewegung in einer Transportrichtung I und zu einer Hin- und Herbewegung in einer Eintauchrichtung II antreibbar. In dem dargestellten Ausführungsbeispiel ist die Eintauchrichtung quer, insbesondere senkrecht zur Transportrichtung I in einer Transportebene des Transportrechens 2.

Die dargestellte Antriebsanordnung 3 ist ähnlich einem SCARA-Roboter aufgebaut. Sie umfasst einen ersten Antrieb 30, mittels welchem eine an einer Welle 31 angeordnete Exzenterscheibe 32 zu einer Verschwenkbewegung um die Längsachse der Welle 31 antreibbar ist. Die Antriebsanordnung 3 umfasst weiter einen zweiten Antrieb 33, mittels welchem ein an der Exzenterscheibe 32 angeordneter Hebel 34 um einen mit der Exzenterscheibe 32 exzentrisch zu der Welle 31 angeordneten Schaft 35 verschwenkbar ist. An einem von der Exzenterscheibe 32 abgewandten Ende des Hebels 34 ist der Transportrechen 2 mittels eines drehbar an dem Hebel 34 gelagerten Verbindungsbolzens 36 befestigt. Durch eine geeignete Ansteuerung der Antriebe 30, 33 ist ein Montagebereich 24 des Transportrechens 2, an welchem der Verbindungsbolzen 36 angreift, entlang einer gewünschten Bahn in der Transportebene bewegbar. Vorzugsweise erfolgt ein Ansteuerung derart, dass der Montagebereich 24 entlang einer Viereckbahn aus einer ersten Position in Transportrichtung I in eine zweite Position, aus der zweiten Position in Eintauchrichtung II weg von dem Transportgut zur Freigabe des Transportguts in eine dritte Position, aus der dritten Position entgegen der Transportrichtung I in eine vierte Position und aus der vierten Position in Eintauchrichtung II in Richtung des Transportguts in die erste Position bewegt wird. Die Bewegungsabschnitte sind vorzugsweise für eine sichere Bewegung des Transportguts geradlinig.

Die Antriebe 30, 33 sind als Elektromotoren, insbesondere als Servomotoren gestaltet. Derartige Motoren erlauben eine einfache Ansteuerbarkeit. Es ist jedoch auch denkbar, pneumatische oder hydraulische Antriebe vorzusehen.

Die Transportvorrichtung 1 umfasst weiter einen in Transportrichtung I verschieblich mit dem Transportrechen 2 gekoppelten Gegenrechen 4. Der Gegenrechen 4 weist eine Vielzahl an Zinken 40 auf, welche jeweils in einem Aufnahmebereich 20 angeordnet sind und mit einem Zinken 21 des Transportrechens 2 zusammenwirken. Durch Bewegen des Gegenrechens 4 relativ zu dem Transportrechen 2 in Transportrichtung I werden die Zinken 40 jeweils in Richtung auf einen den zugehörigen Aufnahmebereich 20 begrenzenden Zinken 21 des Transportrechens 2 bewegt bzw. von diesem entfernt. Dadurch kann zwischen dem Zinken 40 des Gegenrechens 4 und dem zugehörigen Zinken 21 des Transportrechens 2 ein Transportgut, insbesondere auch ein kleines Gefäß wie eine Ampulle oder Vial gegriffen werden. Die zusammenwirkenden Zinken 40, 21 weisen in dem dargestellten Ausführungsbeispiel Greifflächen auf. Die Greifflächen sind in vorteilhaften Ausgestaltungen an das Transportgut angepasst.

In dem dargestellten Ausführungsbeispiel ist der Gegenrechen 4 unterhalb des Transportrechens 2 angeordnet, d.h. der Gegenrechen 4 senkrecht zu einer durch die Transportrichtung I und die Eintauchrichtung II aufgespannten Ebene versetzt zu dem Transportrechen 2 angeordnet. Der Gegenrechen 4 umfasst ebenfalls eine Schiene 42, an welcher mehrere, die Zinken 40 aufweisende Grundkörper 43 ortsfest angebracht sind. Die Zinken 40 ragen von dem Grundkörper 43 ab und sind geeignet geformt, sodass die Zinken 40 des Gegenrechens 4 und die Zinken 21 des Transportrechens ein Transportgut in einem übereinstimmenden Bereich klemmen. Dadurch wird ein Verkippen des Transportguts aufgrund einwirkender Klemmkräfte vermieden.

Der Gegenrechen 4 ist mittels einer Antriebsanordnung 5 zu einer Hin- und Herbewegung in einer Transportrichtung I und zu einer Hin- und Herbewegung quer zur Transportrichtung I in einer Eintauchrichtung II antreibbar.

Der Aufbau der dargestellten Antriebsanordnung 5 entspricht dem Aufbau der Antriebsanordnung 3. Die Antriebsanordnung 5 umfasst ebenfalls einen ersten Antrieb 50, mittels welchem eine an einer Welle 51 angeordnete Exzenterscheibe 52 zu einer Verschwenkbewegung um die Längsachse der Welle 51 antreibbar ist. Die Antriebsanordnung 5 umfasst weiter einen zweiten Antrieb 53, mittels welchem ein an der Exzenterscheibe 52 angeordneter Hebel 54 um einen mit der Exzenterscheibe 52 exzentrisch zu der Welle 51 angeordneten Schaft 55 verschwenkbar ist. An einem von der Exzenterscheibe 52 abgewandten Ende des Hebels 54 ist der Gegenrechen 4 mittels eines drehbar an dem Hebel 54 gelagerten Verbindungsbolzens 56 befestigt. Durch eine geeignete Ansteuerung der Antriebe 50, 53 ist ein Montagebereich 44 des Gegenrechens 4, an welchem der Verbindungsbolzen 56 angreift, entlang einer gewünschten Bahn in der Transportebene bewegbar.

Vorzugsweise erfolgt eine Ansteuerung derart, dass der Montagebereich 44 ebenfalls entlang einer Viereckbahn bewegt wird, wobei der Montagebereich 44 und damit der Gegenrechen 4 eine Bewegung in und entgegen der Transportrichtung I zeitversetzt zu dem Montagebereich 24 des Transportrechens startet. In anderen Worten werden die Antriebe 30, 33, 50 und 53 der Antriebsanordnungen 3, 5 zunächst derart angesteuert, dass die Montagebereich 24, 44 und damit der Transportrechen 2 und der Gegenrechen 4 zeitversetzt jeweils aus einer ersten Position in Transportrichtung I in eine zweite Position bewegt werden.

Die Ansteuerung erfolgt dabei vorzugsweise derart, dass die Bewegung des Gegenrechens 4 vor der Bewegung des Transportrechens 2 startet, sodass die Zinken 40 in Richtung der zugehörigen Zinken 21 bewegt werden und ein Transportgut gegriffen wird, und die Bewegung des Gegenrechens 4 vor der Bewegung des Transportrechens 2 endet, sodass die Zinken 21 weg von den Zinken 40 des Gegenrechens 4 bewegt werden und ein Transportgut freigegeben wird. Durch Wahl eines Zeitversatzes ist dabei eine Anpassung einer Griffbreite möglich. Nachdem der Transportrechen 2 und der Gegenrechen 4 jeweils die zweite Position erreicht haben, ist eine Ansteuerung derart möglich, dass der Transportrechen 2 und der Gegenrechen 4 zusammen aus der zweiten Position in Eintauchrichtung II weg von dem Transportgut in eine dritte Position, aus der dritten Position entgegen der Transportrichtung I in eine vierte Position und aus der vierten Position in Eintauchrichtung II in Richtung des Transportguts in die erste Position bewegt werden. Alternativ ist es denkbar, die Bewegungen aus der zweiten Position in die dritte Position, aus der dritten Position in die vierte Position und/oder aus der vierten Position in die erste Position ebenfalls mit einem Zeitversatz durchzuführen.

Die dargestellten Antriebsanordnungen 3, 5 ermöglichen eine zuverlässige und exakte Bewegungssteuerung, wobei die Zahl der hierfür notwendigen Elemente minimiert ist. Es sind jedoch auch andere Antriebsanordnungen denkbar, welche eine zeitversetzte Bewegung des Transportrechens 2 und des Gegenrechens 4 zum Greifen bzw. Freigeben eines Transportguts zwischen den zugehörigen Zinken 21, 40 erlaubt.

In einer Weiterbildung umfassen die Antriebsanordnungen 3, 5 jeweils zusätzlich einen dritten Antrieb, mittels welchen der Transportrechen 2 und der Gegenrechen 4 in einer Richtung senkrecht einer Transportebene verstellbar sind. Der dritte Antrieb ist dabei in einer Ausgestaltung dem ersten Antrieb 30, 50 jeweils vorgeschaltet, sodass die ersten und zweiten Antriebe mit dem Transportrechen und dem Gegenrechen verstellt werden. In anderen Ausgestaltungen ist der dritte Antrieb so angeordnet, dass der Transportrechen und der Gegenrechen relativ zu den ersten Antrieben 30, 50 und den zweiten Antrieben 33, 53 verstellt wird.

In einer alternativen Ausgestaltung ist vorgesehen, dass der Transportrechen 2 mittels der Antriebsanordnung 3 angetrieben und mittels einer geeigneten Führungseinrichtung in der Bewegung geführt ist, wobei der Gegenrechen 2 an dem Transportrechen 2 gelagert ist und mittels einer ebenfalls an dem Transportrechen 2 angeordneten Antriebsanordnung relativ zu dem Transportrechen 2 zum Greifen des Transportguts verstellt wird.

In noch einer anderen Ausgestaltung erfolgt eine Eintauchbewegung durch Rotation des Transportrechens 2 um eine zur Transportrichtung I parallele Achse und/oder durch eine Bewegung senkrecht zur Transportebene des Transportrechens 2.

## Patentansprüche

1. Transportvorrichtung für ein Transportgut umfassend
- einen Transportrechen (2) mit mehreren Zinken (21),
- eine mit dem Transportrechen (2) wirkverbundene erste Antriebsanordnung (3), wobei der Transportrechen (2) mittels der ersten Antriebsanordnung (3) zu einer Hin- und Herbewegung in Transportrichtung (I) und zu einer Hin-und Herbewegung in Eintauchrichtung (II) antreibbar ist,
- einen Gegenrechen (4) mit mehreren Zinken (40), und
- eine mit dem Gegenrechen (4) wirkverbundene zweite Antriebsanordnung (5), wobei der Gegenrechen (4) mittels der zweiten Antriebsanordnung in Transportrichtung (I) relativ zu dem Transportrechen (2) verstellbar ist,
**dadurch gekennzeichnet, dass**
der Transportrechen (2) und der Gegenrechen (4) mittels der ersten Antriebsanordnung (3) und der zweiten Antriebsanordnung (3, 5) synchron oder mit einem Zeitversatz zu einer Hin- und Herbewegung in der Transportrichtung (I) antreibbar sind, und
der Transportrechen (2) mittels der ersten Antriebsanordnung (3) und der Gegenrechen (4) mittels der zweiten Antriebsanordnung (3, 5) jeweils zu einer Bewegung in Transportrichtung (I) aus einer ersten Position in eine zweite Position antreibbar sind, wobei
- der Gegenrechen (4) mittels der zweiten Antriebsanordnung in Transportrichtung (I) relativ zu dem Transportrechen (2) verstellbar ist, um ein Transportgut zwischen einem der Zinken (21) des Transportrechens und einem zugeordneten Zinken (40) des Gegenrechens (4) zu klemmen, und
- der Transportrechen (2) mittels der ersten Antriebsanordnung und der Gegenrechen (4) mittels der zweiten Antriebsanordnung in Transportrichtung (I) gemeinsam bewegbar sind, wobei bei gemeinsamer Bewegung des Gegenrechens (4) und des Transportrechens (2) ein Transport des Transportguts in Transportrichtung (I) erfolgt.

2. Transportvorrichtung nach Anspruch 1, **dadurch gekennzeichnet, dass** der Transportrechen (2) und der Gegenrechen (4) in Transportrichtung verschieblich miteinander gekoppelt sind.

3. Transportvorrichtung nach Anspruch 1 oder 2, **dadurch gekennzeichnet, dass** die erste Antriebsordnung (3) und die zweite Antriebsanordnung (5) jeweils mindestens zwei miteinander gekoppelte, jeweils um eine senkrecht zur Transportebene stehenden Achse verschwenkbare Glieder und zwei den Gliedern zugeordnete Antriebe (30, 50; 33; 53) aufweisen.

4. Transportvorrichtung nach Anspruch 3, **dadurch gekennzeichnet, dass** die erste Antriebsordnung (5) und die zweite Antriebsanordnung (3, 5) jeweils einen dritten Antrieb aufweisen, mittels welchen der Transportrechen (2) und der Gegenrechen (4) zusammen senkrecht zur Transportebene verstellbar sind.

5. Verfahren zum Betreiben einer Transportvorrichtung für ein Transportgut, wobei die Transportvorrichtung einen Transportrechen (2) mit mehreren Zinken (21), eine mit dem Transportrechen (2) wirkverbundene erste Antriebsanordnung (3), einen Gegenrechen (4) mit mehreren Zinken (40) und eine mit dem Gegenrechen (4) wirkverbundene zweite Antriebsanordnung (5) aufweist, wobei der Transportrechen (2) und der Gegenrechen (4) mittels der ersten Antriebsanordnung (3) und der zweiten Antriebsanordnung (5) synchron oder mit einem Zeitversatz zusammen zu einer Hin- und Herbewegung in der Transportrichtung (I) angetrieben werden, wobei
- der Transportrechen (2) mittels der ersten Antriebsanordnung (3) zu einer Hin- und Herbewegung in Transportrichtung (I) und zu einer Hin- und Herbewegung in Eintauchrichtung (II) angetrieben wird,
- der Gegenrechen (4) mittels der zweiten Antriebsanordnung (5) zu einer Hin- und Herbewegung in Transportrichtung (I) angetrieben wird,
- der Transportrechen (2) mittels der ersten Antriebsanordnung (3) und der Gegenrechen (4) mittels der zweiten Antriebsanordnung (5) jeweils aus einer ersten Position in der Transportrichtung (I) in eine zweite Position bewegt werden, wobei
- der Gegenrechen (4) mittels der zweiten Antriebsanordnung in Transportrichtung (I) relativ zu dem Transportrechen (2) verstellt wird, um ein Transportgut zwischen einem der Zinken (21) des Transportrechens und einem zugeordneten Zinken (40) des Gegenrechens (4) zu klemmen und
- für einen Transport des Transportguts in Transportrichtung der Transportrechen (2) mittels der ersten Antriebsanordnung (3) und der Gegenrechen (4) mittels der zweiten Antriebsanordnung (5) in Transportrichtung (I) gemeinsam bewegt werden.

6. Verfahren nach Anspruch 5, **dadurch gekennzeichnet, dass** der Transportrechen (2) und der Gegenrechen (4) in Transportrichtung verschieblich miteinander gekoppelt werden.

7. Verfahren nach Anspruch 5 oder 6, **dadurch gekennzeichnet, dass** der Transportrechen (2) und der Gegenrechen (4) mittels der ersten Antriebsanordnung (3) und der zweiten Antriebsanordnung (5) angetrieben werden, sodass der Transportrechen (2) und der Gegenrechen (4) mit einem Zeitversatz jeweils aus einer ersten Position in der Transportrichtung (I) in eine zweite Position bewegt werden, aus der zweiten Position synchron in der Eintauchrichtung (II) weg von dem Transportgut in eine dritte Position bewegt werden, aus der dritten Position synchron entgegen der Transportrichtung (II) in eine vierte Position bewegt werden und aus der vierten Position synchron in der Eintauchrichtung (II) auf ein Transportgut in die erste Position bewegt werden.

8. Verfahren nach Anspruch einem der Ansprüche 5 bis 7, **dadurch gekennzeichnet, dass** die erste Antriebsordnung (3) und die zweiten Antriebsanordnung (5) jeweils mindestens zwei miteinander gekoppelte, jeweils um eine senkrecht zur Transportebene stehenden Achse verschwenkbare Glieder und zwei den Gliedern zugeordnete Antriebe (30, 50; 33; 53) aufweisen, wobei die Antriebe (30, 50; 33; 53) angesteuert werden, um die Glieder der ersten Antriebsordnung (3) und der zweiten Antriebsanordnung (5) synchron oder mit Zeitversatz zu verschwenken.

## Claims

1. Conveying device for conveyed goods, comprising
- a conveying rake (2) having a plurality of prongs (21),
- a first drive assembly (3) which is operatively connected to the conveying rake (2), wherein the conveying rake (2) by means of the first drive assembly (3) is drivable so as to perform a reciprocating movement in the conveying direction (I) and a reciprocating movement in the plunging direction (II), and
- a mating rake (4) with a plurality of prongs (40), and
- a second drive assembly (5) which is operatively connected to the mating rake (4), wherein the mating rake (4) by means of the second drive assembly is adjustable in the conveying direction (I) relative to the conveying rake (2),
**characterized in that**
the conveying rake (2) and the mating rake (4) by means of the first drive assembly (3) and of the second drive assembly (3, 5) are drivable in a synchronous or a temporally offset manner so as to perform a reciprocating movement in the conveying direction (I), and
the conveying rake (2) by means of the first drive assembly (3) and the mating rake (4) by means of the second drive assembly (3, 5) are each drivable from a first position into a second position so as to perform a movement in the conveying direction (I), wherein
- the mating rake (4) by means of the second drive assembly is adjustable in the conveying direction (I) relative to the conveying rake (2) so as to clamp conveyed goods between one of the prongs (21) of the conveying rake and an assigned prong (4) of the mating rake (4), and
- the conveying rake (2) by means of the first drive assembly and the mating rake (4) by means of the second drive assembly are collectively movable in the conveying direction (I), wherein in the case of collective movement of the mating rake (4) and of the conveying rake (2), conveying of the conveyed goods in the conveying direction (I) results.

2. Conveying device according to Claim 1, **characterized in that** the conveying rake (2) and the mating rake (4) are intercoupled so as to be displaceable in the conveying direction.

3. Conveying device according to Claim 1 or 2, **characterized in that** the first drive assembly (3) and the second drive assembly (5) have in each case at least two intercoupled members which are in each case pivotable about an axis which is perpendicular to the conveying plane, and two drives (30, 50; 33; 53) which are assigned to the members.

4. Conveying device according to Claim 3, **characterized in that** the first drive assembly (5) and the second drive assembly (3, 5) have in each case one third drive by means of which the conveying rake (2) and the mating rake (4) are collectively adjustable in a manner perpendicular to the conveying plane.

5. Method for operating a conveying device for conveyed goods, wherein the conveying device has a conveying rake (2) having a plurality of prongs (21), a first drive assembly (3) which is operatively connected to the conveying rake (2), a mating rake (4) having a plurality of prongs (40), and a second drive assembly (5) which is operatively connected to the mating rake (4), wherein the conveying rake (2) and the mating rake (4) by means of the first drive assembly (3) and of the second drive assembly (5) are driven in a synchronous or a temporally offset manner so as to perform a reciprocating movement in the conveying direction (I), wherein
- the conveying rake (2) by means of the first drive assembly (3) is driven to perform a reciprocating movement in the conveying direction (I) and to perform a reciprocating movement in the plunging direction (II),
- the mating rake (4) by means of the second drive assembly (5) is driven to perform a reciprocating movement in the conveying direction (I),
- the conveying rake (2) by means of the first drive assembly (3) and the mating rake (4) by means of the second drive assembly (5) are each moved from a first position into a second position in the conveying direction (I), wherein
- the mating rake (4) by means of the second drive assembly is adjusted in the conveying direction (I) relative to the conveying rake (2) so as to clamp conveyed goods between one of the prongs (21) of the conveying rake and an assigned prong (40) of the mating rake (4), and
- for conveying the conveyed goods in the conveying direction, the conveying rake (2) by means of the first drive assembly (3) and the mating rake (4) by means of the second drive assembly (5) are collectively moved in the conveying direction (I).

6. Method according to Claim 5, **characterized in that** the conveying rake (2) and the mating rake (4) are intercoupled so as to be displaceable in the conveying direction.

7. Method according to Claim 5 or 6, **characterized in that** the conveying rake (2) and the mating rake (4) by means of the first drive assembly (3) and of the second drive assembly (5) are driven such that the conveying rake (2) and the mating rake (4) are in each case moved in a temporally offset manner in the conveying direction (I) from a first position to a second position, moved in a synchronous manner in the plunging direction (II) from the second position away from the conveyed goods to a third position, moved in a synchronous manner counter to the conveying direction (II) from the third position to a fourth position, and moved in a synchronous manner in the plunging direction (II) onto conveyed goods into the first position.

8. Method according to one of Claims 5 to 7, **characterized in that** the first drive assembly (3) and the second drive assembly (5) have in each case at least two intercoupled members which are in each case pivotable about an axis which is perpendicular to the conveying plane, and two drives (30, 50; 33; 53) which are assigned to the members, wherein the drives (30, 50; 33; 53) are actuated so as to pivot the members of the first drive assembly (3) and of the second drive assembly (5) in a synchronous or temporally offset manner.

## Revendications

1. Dispositif de transport d'articles à transporter, comprenant
- un râteau de transport (2) pourvu d'une pluralité de dents (21),
- un premier ensemble d'entraînement (3) relié fonctionnellement au râteau de transport (2), le râteau de transport (2) pouvant être entraîné au moyen du premier ensemble d'entraînement (3) suivant un mouvement alternatif dans la direction de transport (I) et suivant un mouvement alternatif dans la direction d'immersion (II),
- un râteau antagoniste (4) pourvu d'une pluralité de dents (40), et
- un deuxième ensemble d'entraînement (5) relié fonctionnellement au râteau antagoniste (4), le râteau antagoniste (4) pouvant être déplacé au moyen du deuxième ensemble d'entraînement dans la direction de transport (I) par rapport au râteau de transport (2),
**caractérisé en ce que**
le râteau de transport (2) et le râteau antagoniste (4) peuvent être entraînés de manière synchrone ou décalée dans le temps suivant un mouvement alternatif dans la direction de transport (I) au moyen du premier ensemble d'entraînement (3) et du deuxième ensemble d'entraînement (3, 5), et
le râteau de transport (2) et le râteau antagoniste (4) peuvent être entraînés au moyen du premier ensemble d'entraînement (3) respectivement au moyen du deuxième ensemble d'entraînement (3, 5) suivant un mouvement dans la direction de transport (I) d'une première position à une deuxième position,
- le râteau antagoniste (4) pouvant être déplacé dans la direction de transport (I) par rapport au râteau de transport (2) au moyen du deuxième ensemble d'entraînement afin de serrer un article à transporter entre l'une des dents (21) du râteau de transport et une dent associée (40) du râteau antagoniste (4) et
- le râteau de transport (2) et le râteau antagoniste (4) pouvant être déplacés conjointement dans la direction de transport (I) au moyen du premier ensemble d'entraînement respectivement au moyen du deuxième ensemble d'entraînement, les articles à transporter étant transportés dans la direction de transport (I) lorsque le râteau antagoniste (4) et le râteau de transport (2) se déplacent conjointement.

2. Dispositif de transport selon la revendication 1, **caractérisé en ce que** le râteau de transport (2) et le râteau antagoniste (4) sont accouplés de manière coulissante l'un à l'autre dans la direction de transport.

3. Dispositif de transport selon la revendication 1 ou 2, **caractérisé en ce que** le premier ensemble d'entraînement et le deuxième ensemble d'entraînement comportent chacun au moins deux biellettes, accouplées l'une à l'autre, qui peuvent pivoter sur un axe perpendiculaire au plan de transport, et deux entraînements (30, 50 ; 33 ; 53) qui sont associés aux biellettes.

4. Dispositif de transport selon la revendication 3, **caractérisé en ce que** le premier ensemble d'entraînement (5) et le deuxième ensemble d'entraînement (3, 5) comportent chacun un troisième entraînement au moyen duquel le râteau de transport (2) et le râteau antagoniste (4) peuvent être déplacés conjointement perpendiculairement au plan de transport.

5. Procédé de fonctionnement d'un dispositif de transport d'un article à transporter, le dispositif de transport comportant un râteau de transport (2) pourvu d'une pluralité de dents (21), un premier ensemble d'entraînement (3) relié fonctionnellement au râteau de transport (2), un râteau antagoniste (4) pourvu d'une pluralité de dents (40) et un deuxième ensemble d'entraînement (5) relié fonctionnellement au râteau antagoniste (4), le râteau de transport (2) et le râteau antagoniste (4) étant entraînés conjointement de manière synchrone ou décalée temporellement suivant un mouvement alternatif dans la direction de transport (I) au moyen du premier ensemble d'entraînement (3) et du deuxième ensemble d'entraînement (5),
- le râteau de transport (2) étant entraîné par le premier ensemble d'entraînement (3) suivant un mouvement alternatif dans la direction de transport (I) et suivant un mouvement alternatif dans la direction d'immersion (II),
- le râteau antagoniste étant entraîné suivant un mouvement alternatif dans la direction de transport (I) au moyen du deuxième ensemble d'entraînement (5),
- le râteau de transport (2) et le râteau antagoniste (4) étant déplacés au moyen du premier ensemble d'entraînement (3), respectivement au moyen du deuxième ensemble d'entraînement (5), d'une première position dans la direction de transport (I) à une deuxième position,
- le râteau antagoniste (4) étant déplacé par rapport au râteau de transport (2) dans la direction de transport (I) au moyen du deuxième ensemble d'entraînement afin de serrer un article à transporter entre l'une des dents (21) du râteau de transport et une dent associée (40) du râteau antagoniste (4) et
- afin de transporter les articles à transporter dans la direction de transport, le râteau de transport (2) et le râteau antagoniste (4) étant déplacés conjointement au moyen du premier ensemble d'entraînement (3), respectivement au moyen du deuxième ensemble d'entraînement (5), dans la direction de transport (I).

6. Procédé selon la revendication 5, **caractérisé en ce que** le râteau de transport (2) et le râteau antagoniste (4) sont accouplés de manière coulissante l'un à l'autre dans la direction de transport.

7. Procédé selon la revendication 5 ou 6, **caractérisé en ce que** le râteau de transport (2) et le râteau antagoniste (4) sont entraînés au moyen du premier ensemble d'entraînement (3) et du deuxième ensemble d'entraînement (5), de sorte que le râteau de transport (2) et le râteau antagoniste (4) soient déplacés avec un décalage temporel d'une première position dans la direction de transport (I) à une deuxième position, écartés de l'article à transporter de manière synchrone dans la direction d'immersion (II) de la deuxième position à une troisième position, déplacés de manière synchrone dans la direction opposée à la direction de transport (II) de la troisième position à une quatrième position et déplacés de manière synchrone dans la direction d'immersion (II) vers un article à transporter de la quatrième position à la première position.

8. Procédé selon l'une des revendications 5 à 7, **caractérisé en ce que** le premier ensemble d'entraînement et le deuxième ensemble d'entraînement comportent chacun au moins deux biellettes, accouplées l'une à l'autre, qui peuvent pivoter sur un axe perpendiculaire au plan de transport, et deux entraînements (30, 50 ; 33 ; 53) qui sont associés aux biellettes, les entraînements (30, 50 ; 33 ; 53) étant commandés pour faire pivoter les biellettes du premier ensemble d'entraînement (3) et du deuxième ensemble d'entraînement (5) de manière synchrone ou décalée temporellement.
